# EUROPÄISCHE PATENTANMELDUNG

(11) **EP 3 960 666 A1**
(43) Veröffentlichungstag der Anmeldung: **02.03.2022**
(21) Anmeldenummer: 20193919.6
(22) Anmeldetag: 01.09.2020
(51) Int. Cl.: B65G 43/02, B07C 5/36, B23P 19/04, B65G 43/08, B65G 47/42

(54) **FÖRDERVORRICHTUNG FÜR PALETTEN**

(71) Anmelder: Maschinenfabrik Möllers GmbH, 59269 Beckum (DE)
(72) Erfinder: Westphal, Volker, 59269 Beckum (DE)
(74) Vertreter: Grünecker Patent- und Rechtsanwälte PartG mbB

(57) **Zusammenfassung**

Die vorliegende Erfindung schlägt eine Fördervorrichtung (1) für Paletten vor, die mit einer Funktion zum Kontrollieren der Qualität gebrauchter tauschfähiger Paletten ausgestattet ist, Somit können beschädigte Paletten (2') in zuverlässiger Weise ausgesondert werden, bevor diese einem nachgelagerten Transport- und Umschlagprozess zugeführt werden. Zu diesem Zweck umfasst die erfindungsgemäße Fördervorrichtung (1) eine Sensorik (4a, 4b, 4c), welche der Förderbahn (3) zugeordnet ist und räumliche Distanzen zur Palette (2, 2') erfasst, eine Datenverarbeitungseinrichtung, welche die ermittelten räumlichen Distanzen mit einer definierten Zielgröße vergleicht und bei Nichteinhaltung der Zielgröße die jeweilige Palette (2') auf der Förderbahn (3) als Fehlerpalette elektronisch markiert, und eine Entnahmeeinrichtung (5), welche die Fehlerpalette (2') aus der Förderbahn (3) entfernt.

## Beschreibung

Die vorliegende Erfindung betrifft eine Fördervorrichtung für Paletten. Sie betrifft insbesondere eine Fördervorrichtung, die mit einer Funktion zum Kontrollieren der Qualität gebrauchter tauschfähiger Paletten ausgestattet ist, um somit beschädigte Paletten auszusondern zu können, bevor diese einem nachgelagerten Transport- und Umschlagprozess zugeführt werden.

Das bevorzugte Anwendungsgebiet der Erfindung sind Fördervorrichtungen, die in Lagern und Lagerhäusern zum Einsatz gelangen, in denen Güter auf Paletten (zwischen)gelagert, umgeschlagen und für den Weitertransport vorbereitet werden.

Der Versand von Waren erfolgt heute in der Regel auf Paletten, auf denen jeweils alle für einen bestimmten Adressaten bestimmten Waren zusammengestellt werden. Sie rationalisieren den Güterumschlag zwischen den verschiedenen Lager- und Transportmitteln, beispielsweise erleichtern sie das Verladen mittels Gabelstapler. Bei den auf der Palette gestapelten Waren kann es sich um Gebinde, z. B. in Kartons, "Trays", Paketen, jeweils meist von quaderförmiger Gestalt, oder Schrumpfpackungen und dergleichen zusammengefasste Warengruppen, handeln. Paletten zum Lagern und Transportieren solcher Gegenstände sind aus dem Stand der Technik hinreichend bekannt.

Insbesondere die Europoolpalette, kurz Europalette, hat sich seit ihrer Einführung in den sechziger Jahren bestens bewährt und findet als genormte Tauschpalette mittlerweile überall Verwendung. Die Europalette verfügt über das folgende Standardformat: 120 cm Länge × 80 cm Breite × 14,4 cm Höhe. Sie ist eine Flachpalette aus Holz, mehrwegfähig, d.h. sie kann bei Be- und Entladung getauscht werden, je nach Holzfeuchtigkeit 20 bis 24 kg schwer und kann bei gleichmäßiger Verteilung über die Palette maximal 1500 kg tragen.

Die praktischen Öffnungen an allen vier Seiten ermöglichen eine Aufnahme der Europalette durch Hubwagen oder Gabelstapler, egal wo und wie diese auch steht. Sie muss niemals in eine entsprechende Transportposition gedreht werden. Sie kann ebenfalls als Unterlage zur Warenlagerung genutzt werden, was sie zu einem universell einsetzbaren Lade- und Lagerhilfsmittel macht. Insbesondere für Hochregallager sind Europaletten geeignet. Sie werden in das Hochregallager eingestellt und über ein Hochregal-Fahrzeug, das zur Bevorratung der Paletten in dem Hochregal dient, transportiert. Eine Vereinzelungseinrichtung kann dann die jeweiligen Waren von den Paletten herunternehmen, um sie z. B. einem Verkaufslager zuzuführen, in welchem die einzelnen Waren bevorratet werden.

Die meisten Industrieunternehmen haben ihre Verpackungsmaschinen auf Europaletten ausgerichtet und fast alle modernen LKW weisen eine an Europaletten angepasste Innenbreite auf, wodurch sie auch gern zum Transport eingesetzt werden.

Alternativ sind auch Paletten aus Kunststoff bekannt. Sie tragen zwar häufig etwas weniger Gewicht, sind dafür aber leichter zu reinigen, staubfrei und witterungsbeständig und finden daher oft im Hygiene- und Lebensmittelbereich und in der Mikroelektronik Verwendung.

Bei gebrauchten Tauschpaletten (wie Europaletten) kann es aber vorkommen, dass auch beschädigte Paletten der Fördervorrichtung eines automatisierten Lager- und Transportsystems zugeführt werden. Besonders problematisch in diesem Zusammenhang sind Beschädigungen der Palettenunterkonstruktion, die im Fall einer Europalette aus drei zueinander parallelen, rahmenartigen Palettenkufen besteht, welche sich wiederum jeweils aus dem unteren Bodenbrett (Standbrett), dem Zwischenbrett einer Palette (unterhalb der Deckbretter) und den dazwischen angeordneten Abstandsklötzen zusammensetzen.

Palettenschäden treten häufig dadurch auf, dass beim Rangieren von Staplerfahrzeugen und Hubwagen versehentlich die am Palettenrand angeordneten Palettenkufen stehender Paletten gerammt werden. Dies kann beim ungenauen Einfahren der Staplergabel unter eine Palette geschehen, kommt aber auch häufig beim Rangieren von Hubwagen oder Staplerfahrzeugen in den Gassen von Palettenlagern vor, insbesondere wenn der Hubwagen oder das Staplerfahrzeug eine beladene Palette transportiert und die Bedienungsperson bzw. der Fahrer die vorstehenden Enden der Hubgabel nicht sehen kann, weil ihm die Sicht durch die beladene Palette versperrt ist.

Die Palettenkufen dürfen aber keineswegs deformiert, gebrochen oder angebrochen sein (Verzug, Abplatzungen, Splitterholz) oder sogar teilweise bzw. ganz fehlen (Ausbrüche), weil dies katastrophale Konsequenzen für den nachgelagerten Lager- und Umschlagprozess mit sich bringen kann.

Neben der Gefahr von vehementen Störungen im kontinuierlichen Fluss der Paletten in Lagerhäusern (Hochregallager u.a.) liegt nämlich auch eine beträchtliche Erweiterung der Gefährdung des Bedienungspersonals vor, wenn Ladungen auf angebrochenen oder beschädigten Paletten auf den Förderwegen oder in den Block- oder Hochregallagern zusammenstürzen. Somit hat das Problem der Palettenprüfung eine ganz außerordentliche Bedeutung erlangt.

Um Störungen zu vermeiden, werden die Paletten gegenwärtig nach Gebrauch gestapelt und durch Sichtkontrolle auf ihre Weiterverwendbarkeit hin untersucht. Diese Sichtkontrollen sind allerdings aufwendig, subjektiv und können das Eintreten von Störungen des Lager- und Umschlagprozesses durch beschädigte Paletten nicht verhindern. Es ist unmittelbar einsichtig, dass die Ergebnisse dieser Art der Palettenprüfung entscheidend von der Qualifikation und Sorgfalt der jeweiligen Mitarbeiter beeinflusst werden und keineswegs als allgemeingültig betrachtet werden können. Hilfsmittel (wie visuelle Merkblätter), um den Mitarbeiter bei der Beurteilung zu unterstützen, schaffen hier nur eingeschränkt Abhilfe.

In Anbetracht dessen hat es sich die vorliegende Erfindung zur Aufgabe gemacht, die vorgenannten Nachteile zu vermeiden und eine Fördervorrichtung für Paletten anzugeben, mit der das objektive Kontrollieren der Paletten auf Maßhaltigkeit in einen automatisierten Förderprozess eingebunden werden kann.

Gelöst wird diese Aufgabe erfindungsgemäß durch eine Fördervorrichtung für Paletten mit den Merkmalen des unabhängigen Anspruchs 1. Weitere vorteilhafte Ausgestaltungen, Aspekte und Details der Erfindung ergeben sich aus den abhängigen Ansprüchen.

Im Einzelnen umfasst eine erfindungsgemäße Fördervorrichtung für Paletten eine Förderbahn zum automatisierten Fördern von Paletten auf einer Förderebene in einer Förderrichtung, eine Sensorik, welche der Förderbahn zugeordnet ist und räumliche Distanzen zu einer Palette erfasst, eine Datenverarbeitungseinrichtung, welche die ermittelten räumlichen Distanzen mit einer definierten Zielgröße vergleicht und bei Nichteinhaltung der Zielgröße die jeweilige Palette auf der Förderbahn als eine Fehlerpalette elektronisch markiert, und eine Entnahmeeinrichtung, welche die Fehlerpalette aus der Förderbahn entfernt.

Bei einer solchen Fördervorrichtung findet vorteilhafterweise gleichzeitig mit der Förderbewegung eine sensorische Kontrolle der geförderten Paletten statt. Durch den Vergleich der sensorisch erfassten Distanz zur Palette mit der definierten Zielgröße wird es beispielsweise möglich zu bestimmen, ob Deck- und/oder Bodenbretter der jeweiligen Palette fehlen, gebrochen oder stark verschoben sind. Die definierte Zielgröße entspricht dabei der Distanz, die von der jeweiligen Sensorik im Fall einer unbeschädigten Palette erfasst werden würde. Diese Zielgröße lässt sich demzufolge im Voraus aus den vorliegenden Randbedingungen (z. B. Palettenabmessungen, Fördergeschwindigkeit, Sensorpositionierung ...) ermitteln. Wurde in der Datenverarbeitungseinrichtung eine Nichteinhaltung dieser Zielgröße registriert, wird die defekte Palette auf der Förderbahn als Fehlerpalette elektronisch markiert und daraufhin durch die Entnahmeeinrichtung aus der Förderbahn entfernt, um die Reparatur oder Entsorgung dieser Palette sicherzustellen.

Unter einer "Entnahmeeinrichtung" im Sinne der vorliegenden Erfindung wird dabei sowohl eine automatische Entnahmeeinrichtung (z. B. mittels eines Entnahmeförderers), welche von der Datenverarbeitungseinrichtung einen Maschinenbefehl zum Entfernen der Fehlerpalette aus der Förderbahn empfängt, als auch eine manuelle Entnahmeeinrichtung (z. B. mittels eines von einem Bediener betriebenen Staplers) verstanden.

Es wird vorzugsweise eine Fördervorrichtung bereitgestellt, bei der die Sensorik zumindest einen Sensor umfasst, wobei der oder jeder Sensor unterhalb der Förderebene derart angeordnet ist, dass dieser die Distanz zu einer Unterseite der Palette in einer zur Förderebene senkrechten Richtung erfasst.

Eine Anordnung des oder der Sensoren unter der Förderebene (d. h. unter der Ebene, welche die Oberfläche der Förderbahn im Bereich der Palettenförderstrecke bildet) ermöglicht es, Schäden auch an der Palettenunterseite (z. B. an den Bodenbrettern der Palettenkufen), die üblicherweise einer visuellen Erkennung nicht ohne Weiteres zugänglich sind, zuverlässig zu erkennen.

Vorzugsweise umfasst die Sensorik mehrere Sensoren, die quer zur Förderrichtung derart angebracht sind, dass sie, in einer zur Förderebene senkrechten Richtung gesehen, jeweils einer parallel zur Förderrichtung verlaufenden Palettenkufe an der Unterseite der Palette zugeordnet sind.

Da insbesondere die Palettenkufen im Gebrauchszustand hohen Belastungen ausgesetzt sind, ist es zweckmäßig die Sensoren quer zur Förderrichtung so zu beabstanden, dass jede Palettenkufe von genau einem darunter liegenden Sensor auf Maßhaltigkeit geprüft wird. Aus der Fördergeschwindigkeit und den Palettenabmessungen ergibt sich, wann die Palettenkufen in den Erfassungsbereich des jeweiligen Sensors hinein und wieder heraus treten.

Alternativ ist auch vorstellbar, dass die Sensorik mehrere Sensoren umfasst, die quer zur Förderrichtung derart angebracht sind, dass sie, in einer zur Förderebene senkrechten Richtung gesehen, entlang einer Haupterstreckungsachse einer Palettenkufe an der Unterseite der Palette angeordnet sind.

Folglich lassen sich auch unterseitige Schäden an Paletten, die mit ihren Kufen quer zur Förderrichtung gefördert werden, zuverlässig bestimmen. In der Steuerung der Fördervorrichtung ist dabei hinterlegt, in welchen Sektionen der normierten Palette jeweils eine Kufe vorhanden sein muss, sodass auch hier unter Berücksichtigung der Fördergeschwindigkeit ermittelbar ist, wann sich die Sensoren im relevanten Auswertebereich befinden.

Vorzugsweise kann es sich bei dem zumindest einen in der erfindungsgemäßen Fördervorrichtung vorgesehenen Sensor um einen punktförmig messenden, linienförmig messenden oder flächenförmig messenden Sensor handeln.

Im Hinblick auf die Kosten für die Sensorik ist es primär vorteilhaft punktförmig wirkende Abstandssensoren einzusetzen. Alternativ lässt sich die erfindungsgemäße Aufgabe aber auch mit linien- oder flächenförmig wirkenden Abstandssensoren lösen. Im letztgenannten Fall ist der Sensor bevorzugt so angepasst, dass der von ihm erfasste Linienbereich bzw. Flächenbereich mit der Erstreckung einer fehlerfreien Palettenkufe übereinstimmt. Somit kann die Anzahl an notwendigen Sensoren und somit sowohl der konstruktive als auch steuerungstechnische Aufwand deutlich reduziert werden.

Bei einer Fördervorrichtung nach einer der vorhergehenden Ausführungsformen entspricht die Zielgröße einer Distanz zwischen dem jeweiligen Sensor und der Förderebene in einer zur Förderebene senkrechten Richtung.

Basierend auf der Annahme, dass eine fehlerfreie und vollständige Palettenunterkonstruktion auf der Oberfläche der Förderbahn (und somit auf der Förderebene) aufliegt, lässt sich die Zielgröße in einfacher Weise nur in Abhängigkeit von der Positionierung des Sensors an der Förderbahn vorbestimmen und in der Datenverarbeitungseinrichtung hinterlegen.

Nach einer weiteren vorteilhaften Ausgestaltung der Erfindung ist vorgesehen, dass die Sensorik Lichttaster und/oder Ultraschallsensoren umfasst.

Lichttaster und/oder Ultraschallsensoren sind kompakt, robust, in der umgebenden Konstruktion (z. B. durch eine Schraubverbindung) einfach installierbar und somit ideal zur Nahdistanzerfassung in der Fördertechnik. Solche Sensoren sind z. B. über flexible Verbindungsleitungen, insbesondere Busleitungen, mit der Datenverarbeitungseinrichtung verbindbar.

Eine Ausführungsform der erfindungsgemäßen Fördervorrichtung besteht darin, dass diese weiter eine Beladeeinrichtung zum Beladen von Paletten umfasst, wobei die Sensorik, in Förderrichtung gesehen, vor der Beladeeinrichtung angeordnet ist, und wobei die Datenverarbeitungseinrichtung mit der Steuerung der Fördervorrichtung derart wirkverbunden ist, dass keine Beladung einer Fehlerpalette erfolgt.

Die Beladeeinrichtung kann als Palettierroboter ausgebildet sein. Das Palettieren mittels eines solchen Palettierroboters wird aber vorteilhafterweise nur dann durchgeführt, wenn von der vorgeschalteten Sensorik keine Distanzabweichungen an der jeweiligen Palette (z. B. herrührend aus verdrehten Holzklötzen, Abplatzungen und -spaltungen u. v. m.) erkannt werden.

Eine weitere vorteilhafte Ausführungsform der erfindungsgemäßen Fördervorrichtung ist dadurch gekennzeichnet, dass die Datenverarbeitungseinrichtung mit einer Steuerung der Fördervorrichtung derart wirkverbunden ist, dass die Fehlerpalette auf der Förderbahn gestoppt und daraufhin von der Entnahmeeinrichtung der Förderbahn entnommen wird.

Der Fahrantrieb der Fördervorrichtung wird bei Erfassung einer abweichenden Fehlerpalette gestoppt und die Entnahmeeinrichtung wird aktiviert, um diese Palette sofort auszuschleusen. Sie kann daraufhin manuell überprüft und gegebenenfalls nachbearbeitet werden.

Bei einer weiteren bevorzugte Ausführungsform der erfindungsgemäßen Fördervorrichtung ist vorgesehen, dass die Datenverarbeitungseinrichtung mit einer Steuerung der Fördervorrichtung derart wirkverbunden ist, dass die Fehlerpalette bis zur Entnahmeeinrichtung weiter transportiert wird.

Somit kann in effizienter Weise auch bei festgestellten Palettenschäden ein Anlagenstopp vermieden werden. Die von der Datenverarbeitungseinrichtung als beschädigt vermerkte Palette wird ohne Beladung von der Fördervorrichtung zur Entnahmeeinrichtung gefördert.

Schließlich ist bei einer weiteren vorteilhaften Ausführungsform der erfindungsgemäßen Fördervorrichtung die Entnahmeeinrichtung als Hubstapler oder als Entnahmeförderer ausgebildet.

Eine Leerpalette kann sehr einfach mit einem Hubstapler oder einem Entnahmeförderer aus der Förderbahn entfernt und einer Sammelstelle zur weiteren Begutachtung zugeführt werden.

Weitere Vorteile, vorteilhafte Ausführungsformen und Weiterbildungen der erfindungsgemäßen Fördervorrichtung sind Gegenstand der Figuren und der zugehörigen nachfolgenden Beschreibung. Es zeigen im Einzelnen:
- Fig. 1: eine perspektivische Ansicht eines Ausführungsbeispiels der erfindungsgemäßen Fördervorrichtung mit einer in Förderrichtung bewegten Palette;
- Fig. 2: eine perspektivische Detailansicht der Fördervorrichtung nach Fig. 1 mit aus Illustrationsgründen teilweise entfernten Abdeckungen und angehobener Palette;
- Fig. 3: eine perspektivische Detailansicht der Fördervorrichtung nach Fig. 1 im Bereich der Sensoren;
- Fig. 4: eine perspektivische Detailansicht eines weiteren Ausführungsbeispiels der erfindungsgemäßen Fördervorrichtung im Bereich der Sensoren; und
- Fig. 5: eine perspektivische Ansicht eines weiteren Ausführungsbeispiels der erfindungsgemäßen Fördervorrichtung mit einer Beladeeinrichtung (Palettierroboter).

Nachfolgend werden anhand der Figuren bevorzugte Ausführungsbeispiele einer erfindungsgemäßen Fördervorrichtung 1 näher erläutert.

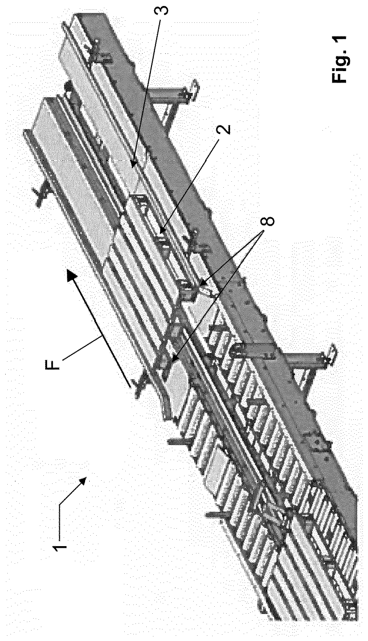

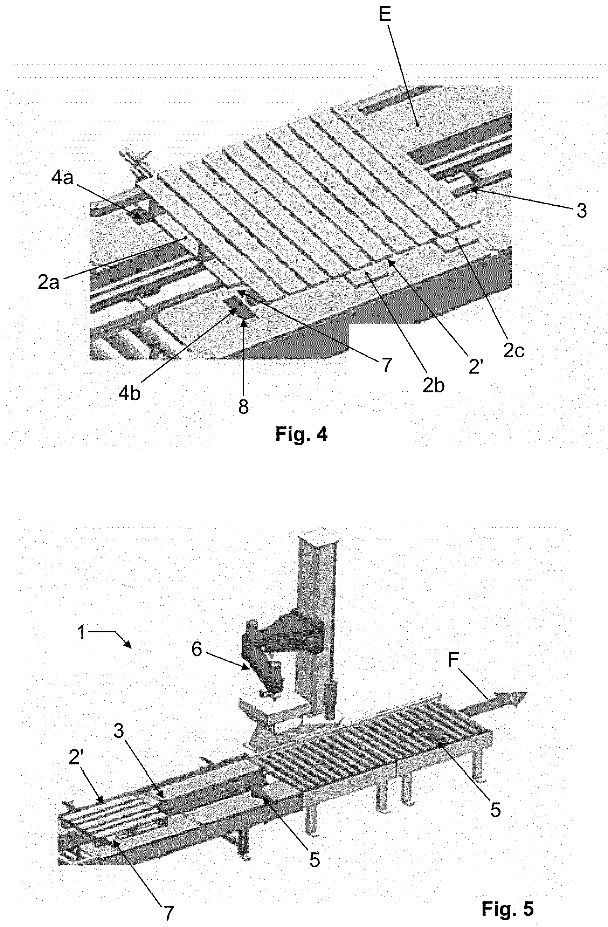

Eine solche, jeweils in Fig. 1 und 5 exemplarisch gezeigte Fördervorrichtung 1 dient dem Fördern von Leerpaletten 2, 2', vorzugsweise Europaletten aus Holz, in einer horizontalen Förderrichtung F zu einer Beladeeinrichtung 6, die entsprechend Fig. 5 durch einen Palettierroboter gebildet ist. Durch den Einsatz von Leerpalettenmagazinen (nicht gezeigt) kann eine Leerpalette mittels der Fördervorrichtung 1 auf den gewünschten Palettierplatz befördert werden, ohne die Leistung des Palettierroboters 6 negativ zu beeinflussen. Somit wird eine hoher Automatisierungsgrad und eine gesteigerte Produktionsleistung erzielt. Der Roboter 6 ruft die benötigten Leerpaletten selbsttätig aus dem Leerpalettenmagazin ab.

Es ist offensichtlich, dass der verzögerungsfreie Tausch von Voll- gegen Leerpaletten entscheidend für die Palettierleistung des Roboters 6 ist. Um eine effiziente Auslegung der Roboterzelle zu erreichen, wird Palettenfördertechnik eingesetzt, um ohne Unterbrechung des Produktionsprozesses weiterpalettieren zu können. Ein Bedienereingriff in die Roboterzelle zum Palettentausch ist hierbei nicht mehr notwendig. Bei laufender Produktion können mehrere Gebindearten ohne Unterbrechung palettiert werden und sogar auf einer Palette 2 gemischt werden.

Nach der Beladung wird die Palette 2 mittels der Fördervorrichtung 1 zu einer nicht gezeigten Abnahmestation weiter gefördert, wo die beladenen Paletten 2 z. B. mittels Stapler aus der Förderbahn 3 entnommen werden. Währenddessen wird die nächste Leerpalette über die Fördervorrichtung 1 wieder zu der Beladestation (Palettierroboter 6) transportiert. Die gesamte Fördervorrichtung 1 ist für eine Vielzahl von (leeren und vollen) Paletten 2 ausgelegt, die in einem geschlossenen Kreislauf laufen.

Die Fördervorrichtung 1 setzt sich aus Rollenförderern und Kettenförderern zusammen, die zwischen zwei Tragrahmen jeweils eine Förderbahn 3 bilden, welche an die standardisierten Maße der Palette 2 angepasst ist. Rollenförderer umfassen im Allgemeinen antreibbare Transportrollen, die zwischen den beiden Tragrahmen drehbar gelagert sind. Kettenförderer bestehen im Allgemeinen aus einem oder mehreren umlaufenden Kettensträngen, auf welchen die zu transportierende Palette 2 aufliegt. Die Antriebskettenräder sind über eine Welle miteinander verbunden. Der Kettentrieb wird von einem Elektromotor angetrieben, welcher meist zweistufig angesteuert wird (Schleich- und Hauptgeschwindigkeit). Kettenförderer werden vorliegend auch in der Beladestation (Palettierroboter 6) und in der später erläuterten Entnahmestation (Entnahmeeinrichtung 5) eingesetzt.

Durch die Kombination von Kettenförderern und Rollenförderern ist es möglich, sowohl kleine Paletten mit 80 cm Breite als auch Paletten mit 100 cm, 114 cm oder 120 cm Breite auf der gleichen Fördervorrichtung aufzunehmen und sicher zur nächsten Station zu transportieren. Die Paletten 2, deren Unterseiten nicht dem Verlauf der Kettenstränge entsprechen, gleiten dann mit ihren Palettenkufen 2a, 2b, 2c auf den Abdeckblechen der Kettenförderer. Die erfindungsgemäße Vorrichtung 1 ist aufgrund ihrer speziellen Kombination von Kettenförderer und Rollenbahn also dazu geeignet, verschiedene Palettentypen unterschiedlicher Abmessungen zu transportieren. Dabei ist es nicht von Bedeutung, ob die Paletten in Längs- oder Querrichtung befördert werden sollen. Durch diese spezielle Kombination können auch eine oder mehrere Rollenbahnen von einer Kette des Kettenförderers mit angetrieben werden. Somit wird für das ganze System nur eine Antriebseinheit benötigt, sodass die Fördergeschwindigkeit der einzelnen Komponenten nicht speziell synchronisiert werden muss.

Bei den geförderten Paletten 2, 2' (insbesondere Europaletten) handelt es sich um genormte Mehrwegpaletten (Tauschpaletten). Durch jeden Nutzungsprozess treten aber vielfache und vielfältige Belastungen auf, welche die jeweilige Palette 2' signifikant schädigen können. Als besonders problematisch erweisen sich hierbei Schädigungen (z. B. aufgrund von Verzug, Abplatzungen, Splitterholz, Bruchschäden ...) an der Unterseite der Palette 2', die bei einer Europalette durch die drei gleichmäßig voneinander beabstandeten Palettenkufen 2a, 2b, 2c gebildet wird. Diese Palettenkufen 2a, 2b, 2c, die umgangssprachlich im Fall einer Europalette auch als "Unterhölzer" bezeichnet werden, weisen jeweils ein Bodenbrett und ein Zwischenbrett (unterhalb der Deckbretter) auf, wobei das Bodenbrett und das Zwischenbrett jeweils über die äußeren Abstandsklötze auf Abstand gehalten sind. Für die Funktionsfähigkeit und Sicherheit von palettenbasierten Lager- und Transportsportsystemen ist von wesentlicher Bedeutung, dass die Palettenkufen 2a, 2b, 2c noch komplett in Ordnung sind, d.h., dass sich aufgrund der oben erwähnten Schädigungsarten noch keine Fehlstellen 7 entlang den Palettenkufen 2a, 2b, 2c gebildet haben.

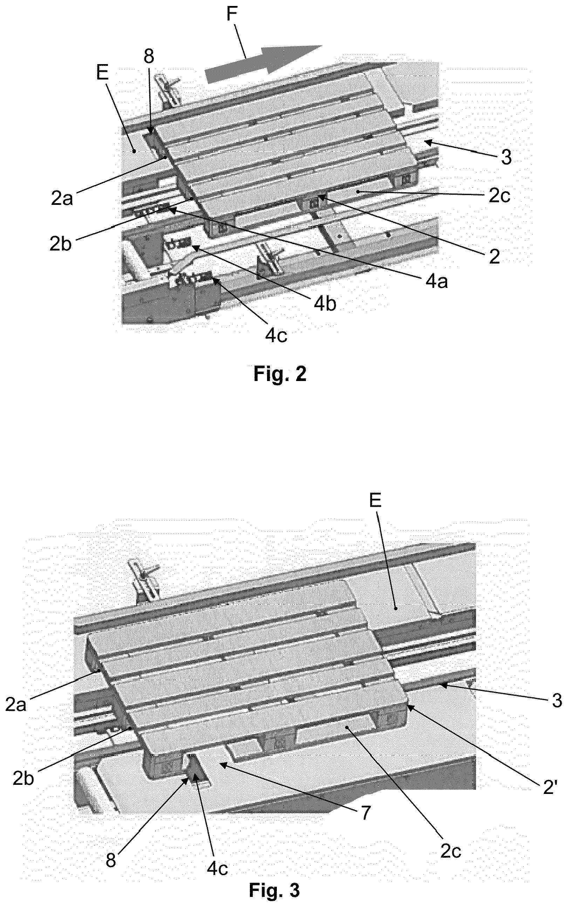

Beschädigte Paletten 2', die entlang den Palettenkufen 2a, 2c solche Fehlstellen 7 aufweisen, sind jeweils in Fig. 3, 4 und 5 wiedergegeben. Wie hieraus erkennbar, fehlt jeweils bei einer der drei Palettenkufen 2a, 2c ein ganzes Teilstück des Bodenbretts. Solche durch Gewalteinwirkung weggebrochenen Teilstücke der Palettenkufe 2a, 2c stellen eine gravierende Schwachstelle dar, mit der unweigerlichen Folge, dass die betreffende Palette 2' nicht länger im Paletten-Tauschpool tauschfähig ist. Beschädigte und somit nicht tauschfähige Paletten 2' müssen vielmehr sofort aus dem Paletten-Tauschpool ausgeschleust werden und einer zertifizierten Reparatur oder geeigneten Entsorgung zugeführt werden.

Eine rein visuelle Kontrolle des Palettenzustandes vor der Beladung ist unzureichend, um zu verhindern, dass derart beschädigte Paletten 2' einem automatischen Fördersystem, wie der in Fig. 1 und 5 illustrierten Fördervorrichtung 1, zugeführt werden. Daher wird in diesem Zusammenhang erfindungsgemäß vorgeschlagen nach dem Vereinzeln der Leerpalette 2, 2' aus dem Leerpalettenmagazin die Palettenunterseite (insbesondere die Palettenkufen 2a, 2b, 2c) mit einer geeigneten Sensorik 4a, 4b, 4c auf ihre Unversehrtheit zu prüfen. Dabei gelangen Sensoren 4a, 4b, 4c zum Einsatz, welche die Distanz zwischen dem Sensor 4a, 4b, 4c und einer Zielfläche (hier: der Palettenunterseite) messen. Zur Distanzmessung werden bevorzugt berührungslose optische Sensoren (z. B. Lichttaster, die ohne Reflektor auskommen) oder Ultraschallsensoren verwendet.

Wie aus Fig. 2 ersichtlich, sind die Sensoren 4a, 4b, 4c alle unterhalb der (d. h. gravitationsmäßig tiefer als die) Förderebene E am Gestell der Fördervorrichtung 1 befestigt. Mit "Förderebene" ist hierbei die horizontale Ebene gemeint, auf der die Paletten 2, 2' in Förderrichtung F bewegt werden. Die Förderebene E stimmt also mit der Oberfläche der entsprechenden Förderbahn 3 überein. Zur Sichtbarmachung der drei Sensoren 4a, 4b, 4c sind in Fig. 2 die Abdeckbleche der Förderbahn 3, unterhalb derer sich die Sensoren 4a, 4b, 4c befinden, entfernt bzw. angehoben und auch die Palette 2 in einer leicht angehobenen Stellung gezeigt.

Im fertig verbauten Zustand der Fördervorrichtung 1 gemäß Fig. 3 sind die Sensoren 4a, 4b, 4c zur Distanzmessung unsichtbar und vor äußeren Einflüssen weitestgehend geschützt unterhalb der Abdeckbleche der Förderbahn 3 angeordnet. Um aber die Distanz zur Unterseite der darüber geförderten Palette 2, 2' messen zu können, sind in den Abdeckblechen rechteckförmige Sensorausnehmungen 8 vorgesehen, durch die der jeweilige Sensor 4a, 4b, 4c das (reflektierte) optische oder akustische Signal zur Distanzmessung aussendet bzw. empfängt.

Wie des Weiteren aus Fig. 2 ersichtlich ist, sind die drei Sensoren 4a, 4b, 4c in einer senkrecht zur Förderebene E gesehenen Richtung so weit in Querrichtung der Förderbahn 3 voneinander beabstandet, dass unter den sich parallel zur Förderrichtung F erstreckenden Achsen einer jeden Palettenkufe 2a, 2b, 2c jeweils ein Sensor 4a, 4b, 4c angeordnet ist. Aus den Stellungen bzw. Positionen oder Betriebszuständen der Förderorgane der Fördervorrichtung 1 und aus dem jeweiligen Standardformat der geförderten Palette 2, 2' ist der Steuerung der Fördervorrichtung 1 bekannt, wann - während des Fördervorgangs - der Anfang und das Ende der Palette 2, 2' die Position der Sensoren 4a, 4b, 4c erreicht. Innerhalb dieses Auswertebereichs (Zeitfensters) wird dann ermittelt, ob die in einer Richtung senkrecht zur Förderebene E gemessene Distanz zwischen dem Sensor 4a, 4b, 4c und der Palettenunterseite der Distanz zwischen dem Sensor 4a, 4b, 4c und der Förderebene E (also der Oberfläche der Förderbahn 3, auf der die Palette 2, 2' liegt), entspricht. Diese letztgenannte Distanz hängt alleine von der konstruktiven Ausgestaltung der Fördervorrichtung 1 (insbesondere der vertikalen Positionierung der Sensoren 4a, 4b, 4c) ab und bildet die einzuhaltende Zielgröße (Sollgröße), während die erstgenannte, sensorisch erfasste Distanz zur Palettenunterseite die zu kontrollierende Istgröße bildet.

In einer nicht dargestellten Datenverarbeitungseinrichtung wird die gemessene Istgröße mit der vordefinierten Zielgröße verglichen. Übersteigt die Differenz zwischen diesen beiden Größen ein vorgegebenes Toleranzmaß, so wird von der Datenverarbeitungseinrichtung festgestellt, dass die Palettenunterseite (z. B. infolge einer in Fig. 3 und 4 gezeigten Fehlstelle 7) beschädigt ist. Daraufhin wird von der Datenverarbeitungseinrichtung ein Maschinenbefehl zum Entfernen der Palette 2' aus der Förderbahn 3 erzeugt und an eine entsprechende Entnahmeeinrichtung 5 übermittelt.

Die Entnahmeeinrichtung 5 kann in unterschiedlichster Weise konstruktiv ausgestaltet sein. In Fig. 5 ist eine solche Entnahmeeinrichtung 5 daher lediglich in Form eines quer zur Förderrichtung F gerichteten Entnahmepfeils symbolisiert. Im Hinblick auf die Positionierung der Entnahmeeinrichtung 5 bestehen im Einklang mit Fig. 5 grundsätzlich zwei Möglichkeiten.

So kann die Datenverarbeitungseinrichtung mit der Steuerung der Fördervorrichtung 1 derart wirkverbunden sein, dass unmittelbar nach Detektion einer beschädigten (die vordefinierte Zielgröße nicht einhaltenden) Palette 2', die Förderbewegung der Fördervorrichtung 1 gestoppt wird. Daraufhin wird von der Entnahmeeinrichtung 5, die sich in Förderrichtung F gesehen unmittelbar nach der Prüfstation und unmittelbar vor der Beladestation befindet, die beschädigte Palette 2' seitlich (quer zur Förderrichtung F) aus der Förderbahn 3 herausgenommen. Zu diesem Zweck kann die Entnahmeeinrichtung 5 in Form eines Hubförderers ausgebildet sein, der die beschädigte Palette 2' anhebt und aus der Förderbahn 3 z. B. an eine zentrale Sammelstelle zur finalen Begutachtung umsetzt.

Erfindungsgemäß ist vorgesehen, dass die als beschädigt erkannte Palette 2' als Fehlerpalette von der Datenverarbeitungseinrichtung elektronisch markiert wird. Dementsprechend wird die Fehlerpalette 2' zunächst zur Beladestation weiter gefördert. Allerdings erfolgt hier keine Beladung durch die Beladeeinrichtung (Palettierroboter) 6, sondern die beschädigte Palette 2' (Fehlerpalette) wird unbeladen durchgeschleust. Im Anschluss erfolgt dann von der Steuerung der Fördervorrichtung 1 ein Stopp der Förderbewegung, sodass die durchgeschleuste unbeladene Palette 2' (Fehlerpalette) mithilfe der Entnahmeeinrichtung 5, z.B. mithilfe eines Hubförderers, in vorbeschriebener Weise seitlich aus der Förderbahn 3 herausgehoben und ausgesondert werden kann.

Alternativ oder zusätzlich kann die Fördervorrichtung 1 auch derart konfiguriert sein, dass sie die als beschädigt erkannten Paletten 2' kontinuierlich an einen oder mehrere Entnahmeförderer übergibt. Der Gassenwechsel von der regulären Förderstrecke zum Entnahmeförderer kann mit entsprechender Weichen- oder Querversetztechnik vollzogen werden. Der Entnahmeförderer fördert die als beschädigt erkannten Paletten 2' aus der Fördervorrichtung 1 heraus an eine zentrale Sammelstelle (z. B. an ein Palettenmagazin), wo eine finale Begutachtung der Paletten 2' stattfinden kann. Die vorbeschriebene Konfiguration bringt den Vorteil mit sich, dass die Ausschleusung beschädigter, nicht tauschfähiger Paletten 2' in kontinuierlicher Weise, also ohne Anlagenstopp, verwirklicht werden kann, sodass diese Qualitätssicherungsmaßnahme die Effizienz des Transport- und Ladeprozesses nur unwesentlich belastet.

In Fig. 4 wird ein alternatives Ausführungsbeispiel gezeigt, wonach die Fördervorrichtung 1 ausgelegt ist, die Paletten 2, 2' in Querorientierung, d. h. mit sich jeweils quer zur Förderrichtung F erstreckenden Kufen 2a, 2b, 2c, zu transportieren. Aus Fig. 4 geht zudem hervor, dass Sensoren 4a, 4b zur Messung einer Distanz zur Unterseite der Palette 2, 2' wieder unterhalb der Förderebene E positioniert sind. Deshalb sind abermals in den Abdeckblechen der Förderbahn 3, deren Oberflächen sich in der Förderebene E erstrecken, rechteckförmige Sensorausnehmungen 8 vorgesehen, durch welche die Sensoren 4a, 4b jeweils ihre Signale zur Distanzmessung aussenden bzw. empfangen. Dabei sind zwei Sensoren 4a, 4b quer zur Förderrichtung F derart am Gestell der Fördervorrichtung 1 angebracht, dass sie in einer senkrecht zur Förderebene E gesehenen Richtung jeweils entlang einer Haupterstreckungsachse einer darüber bewegten Palettenkufe (2a, 2b, 2c) zu liegen kommen.

In Fig. 4 befindet sich die Palette 2' in einer Förderposition, bei der die in Förderrichtung F gesehen hintere Palettenkufe 2a die beiden Sensorausnehmungen 8 gerade überfahren hat. Wie bereits im Zusammenhang mit Fig. 2 und 3 erläutert, sind in der Datenverarbeitungseinrichtung alle Informationen hinterlegt (hinsichtlich Palettenformat und maßgeblichen Förderparametern), um ermitteln zu können, wann die relevanten Abschnitte der Palette 2, 2', nämlich die Palettenkufen 2a, 2b, 2c, in den Erfassungsbereich der Sensoren 4a, 4b gelangen und diesen wieder verlassen. Innerhalb dieses Zeitfensters erfolgt in der Datenverarbeitungseinrichtung wiederum die vergleichende Auswertung der definierten Zielgröße (feste Distanz zwischen Sensor 4a, 4b und Förderebene E) und der variablen Istgröße (aktuell gemessene Distanz zwischen Sensor 4a, 4b und Palettenunterseite).

Demzufolge dienen beide Sensoren 4a, 4b der Überprüfung jeder der drei Palettenkufen 2a, 2b, 2c auf Maßhaltigkeit. Liegt bei einer Palettenkufe 2a, 2b, 2c, wie bei der hinteren Palettenkufe 2a in Fig. 4, eine Fehlstelle 7 vor, so wird von der mit den Sensoren 4a, 4b verbundenen Datenverarbeitungseinrichtung eine Abweichung von der definierten Zielgröße registriert. Darauf wird von der Datenverarbeitungseinrichtung ein Maschinenbefehl generiert, welcher von der Entnahmeeinrichtung 5 empfangen wird, sodass die als beschädigt erkannte Palette 2' sicher aus der Förderbahn 3 entfernt wird (wie in Fig. 5 symbolisiert).

Von der Fördervorrichtung 1 nach Fig. 5 wird die Versorgung des Palettierroboters 6 mit Leerpaletten 2 gewährleistet. Allerdings ist dieses Ausführungsbeispiel nicht einschränkend zu verstehen, da eine erfindungsgemäße Fördervorrichtung 1 auch in anderen Umgebungen (z. B. am Eingang oder Ausgang eines Hochregallagers) vorteilhaft zum Einsatz gelangen kann. Relevant ist vielmehr, dass sich hier durch eine gleichzeitig zur Förderbewegung stattfindende sensorische Erfassung und Auswertung der Distanzen zur geförderten Palette 2, 2' eine kontinuierliche Überwachung der Palettenqualität erreichen lässt.

Die Ausführungsbeispiele sind zwar auf die sensorische Überwachung der Palettenkufen 2a, 2b, 2c an der Unterseite der Palette 2, 2' gerichtet. Es wäre jedoch alternativ oder zusätzlich vorstellbar, mit der der Förderbahn 3 zugeordneten Sensorik 4a, 4b, 4c die Deckbretter der Palette 2, 2' auf Maßhaltigkeit zu überprüfen, um sich ein vollständigeres Bild über den Qualitätszustand der Palette 2, 2' zu verschaffen.

In jedem Fall kann der hohe Arbeitsaufwand für die visuelle Eingangskontrolle von Paletten 2, 2' reduziert oder gar völlig eliminiert werden. Ferner können sowohl die Fördervorrichtung 1 als auch die nachgeschalteten Systeme in hocheffizienter Weise ohne negative Beeinflussung durch Palettenschäden betrieben werden.

## Patentansprüche

1. Fördervorrichtung (1) für Paletten (2, 2'), umfassend:
eine Förderbahn (3) zum automatisierten Fördern von Paletten (2, 2') auf einer Förderebene (E) in einer Förderrichtung (F),
eine Sensorik (4a, 4b, 4c), welche der Förderbahn (3) zugeordnet ist und räumliche Distanzen zu einer Palette (2, 2') erfasst,
eine Datenverarbeitungseinrichtung, welche die ermittelten räumlichen Distanzen mit einer definierten Zielgröße vergleicht und bei Nichteinhaltung der Zielgröße die jeweilige Palette (2') auf der Förderbahn (3) als Fehlerpalette elektronisch markiert, und
eine Entnahmeeinrichtung (5), welche die Fehlerpalette (2') aus der Förderbahn (3) entfernt.

2. Fördervorrichtung (1) nach Anspruch 1, **dadurch gekennzeichnet, dass** die Sensorik zumindest einen Sensor (4a, 4b, 4c) umfasst, wobei der oder jeder Sensor (4a, 4b, 4c) unterhalb der Förderebene (E) derart angeordnet ist, dass dieser die Distanz zu einer Unterseite der Palette (2, 2') in einer zur Förderebene (E) senkrechten Richtung erfasst.

3. Fördervorrichtung (1) nach Anspruch 1 oder 2, **dadurch gekennzeichnet, dass** die Sensorik mehrere Sensoren (4a, 4b, 4c) umfasst, die quer zur Förderrichtung (F) derart angebracht sind, dass sie, in einer zur Förderebene (E) senkrechten Richtung gesehen, jeweils einer parallel zur Förderrichtung (F) verlaufenden Palettenkufe (2a, 2b, 2c) an der Unterseite der Palette (2, 2') zugeordnet sind.

4. Fördervorrichtung (1) nach Anspruch 1 oder 2, **dadurch gekennzeichnet, dass** die Sensorik mehrere Sensoren (4a, 4b, 4c) umfasst, die quer zur Förderrichtung (F) derart angebracht sind, dass sie, in einer zur Förderebene (E) senkrechten Richtung gesehen, entlang einer Haupterstreckungsachse einer Palettenkufe (2a, 2b, 2c) an der Unterseite der Palette (2, 2') angeordnet sind.

5. Fördervorrichtung (1) nach einem der Ansprüche 2 bis 4, **dadurch gekennzeichnet, dass** es sich bei dem zumindest einen Sensor (4a, 4b, 4c) um einen punktförmig messenden, linienförmig messenden oder flächenförmig messenden Sensor handelt.

6. Fördervorrichtung (1) nach einem der vorhergehenden Ansprüche 2 bis 5, **dadurch gekennzeichnet, dass** die Zielgröße einer Distanz zwischen dem jeweiligen Sensor (4a, 4b, 4c) und der Förderebene (E) in einer zur Förderebene (E) senkrechten Richtung entspricht.

7. Fördervorrichtung (1) nach einem der vorhergehenden Ansprüche 1 bis 6, **dadurch gekennzeichnet, dass** die Sensorik (4a, 4b, 4c) Lichttaster und/oder Ultraschallsensoren umfasst.

8. Fördervorrichtung (1) nach einem der vorhergehenden Ansprüche 1 bis 7, **dadurch gekennzeichnet, dass** diese weiter eine Beladeeinrichtung (6) zum Beladen von Paletten (2) umfasst, wobei die Sensorik (4a, 4b, 4c), in Förderrichtung (F) gesehen, vor der Beladeeinrichtung (6) angeordnet ist, und wobei die Datenverarbeitungseinrichtung mit der Steuerung der Fördervorrichtung (1) derart wirkverbunden ist, dass keine Beladung einer Fehlerpalette (2') erfolgt.

9. Fördervorrichtung (1) nach einem der vorhergehenden Ansprüche 1 bis 8, **dadurch gekennzeichnet, dass** die Datenverarbeitungseinrichtung mit einer Steuerung der Fördervorrichtung (1) derart wirkverbunden ist, dass die Fehlerpalette (2') auf der Förderbahn (3) gestoppt und daraufhin von der Entnahmeeinrichtung (5) der Förderbahn (3) entnommen wird.

10. Fördervorrichtung (1) nach einem der vorhergehenden Ansprüche 1 bis 9, **dadurch gekennzeichnet, dass** die Datenverarbeitungseinrichtung mit einer Steuerung der Fördervorrichtung (1) derart wirkverbunden ist, dass die Fehlerpalette (2') bis zur Entnahmeeinrichtung (5) weiter transportiert wird.

11. Fördervorrichtung (1) nach einem der vorhergehenden Ansprüche 1 bis 10, **dadurch gekennzeichnet, dass** die Entnahmeeinrichtung (5) als Hubstapler oder als Entnahmeförderer ausgebildet ist.
